# FASCICULE DE BREVET EUROPEEN

(11) **EP 1 481 252 B1**
(45) Date de publication et mention de la délivrance du brevet: **11.10.2006**
(21) Numéro de dépôt: 03718866.1
(22) Date de dépôt: 13.02.2003
(51) Int. Cl.: G01N 35/10, B01L 3/02

(54) **DISPOSITIF DE PIPETAGE AUTOMATIQUE DE PRECISION**
AUTOMATISCHE PRÄZISIONSPIPETTIERVORRICHTUNG
AUTOMATIC PRECISION PIPETTING DEVICE

(30) Priorité: 25.02.2002 FR 0202379
(43) Date de publication de la demande: 01.12.2004
(73) Titulaire: Stago Instruments, 92230 Gennevilliers (FR)
(72) Inventeur: ABOU-SALEH, Khaled, F-92400 Courbevoie (FR); ROUSSEAU, Alain, F-75004 Paris (FR)
(74) Mandataire: de Saint-Palais, Arnaud Marie
(86) Numéro de dépôt international: PCT/FR2003/000457
(87) Numéro de publication internationale: WO 2003/073108

(56) Documents cités:
- EP-A- 0 070 571
- EP-A- 0 569 213
- FR-A- 2 815 719
- US-A- 3 810 720
- US-A- 4 476 095
- US-A- 4 926 701
- US-A- 5 474 744

## Description

La présente invention concerne un dispositif de pipetage automatique de précision avec rinçage de la pipette, ce dispositif permettant la reconstitution des réactifs et étant utilisable dans un automate d'analyse.

Elle a plus particulièrement pour objet un dispositif de ce type présentant une structure modulaire lui permettant de s'adapter aisément selon la précision et les spécifications requises, tant en ce qui concerne les quantités de produits prélevées dans la pipette que les quantités de liquide de rinçage utilisées.

D'une manière générale, on sait qu'il a déjà été proposé de nombreux dispositifs permettant d'exécuter des cycles de pipetage et de rinçage, notamment au sein d'un dispositif d'analyse automatique.

Habituellement, ces dispositifs font intervenir au moins deux motorisations, l'une servant à actionner une seringue de dosage, tandis que l'autre sert à l'entraînement en rotation d'une pompe servant à l'injection du liquide de rinçage. En effet, la seringue de dosage qui est prévue pour de faibles quantités de liquide n'a pas une capacité suffisante pour effectuer un rinçage.

Cette solution est donc relativement complexe et coûteuse. Elle fait intervenir une pompe dont la motorisation est coûteuse énergétiquement et dont la fragilité et la durée de vie sont moins bonnes que celles de la seringue. La fiabilité de l'ensemble n'est donc pas à la hauteur de ce que l'on pourrait attendre. Or, ce type de dispositif doit pouvoir fonctionner, sans aucune maintenance, pendant au moins sept ans au rythme de l'automate sur lequel il est utilisé. Dans le cas d'un automate tel que celui décrit dans le brevet FR 2 779 827, ce rythme est de 60 tests par heure pendant au moins deux heures par jour et ce, 220 jours par an (soit environ 185 000 tests).

Or, on constate que le mécanisme d'actionnement de la seringue est le siège d'une usure engendrant à la longue un jeu de plus en plus important. Ceci est notamment le cas lorsque ce mécanisme comporte un motoréducteur couplé à la tige de la seringue par l'intermédiaire d'un dispositif de conversion du mouvement de rotation du moteur en un mouvement linéaire de ladite tige. Le jeu est alors dû à l'usure des dentures des pignons et/ou des crémaillères utilisés tant dans le réducteur que dans le dispositif de conversion.

Bien entendu, la précision du dispositif de pipetage se trouve affectée par ce jeu qui agit à la façon d'un hystérésis pour limiter la course de la tige de la seringue à ses deux extrémités. Ce jeu se manifeste plus particulièrement à chaque inversion du sens de rotation du moteur. Il est d'autant plus nuisible à la précision du dispositif que les données numériques relatives aux quantités de liquide prélevées par la pipette sont fournies par un codeur numérique équipant le moteur et qu'en conséquence, le jeu mécanique induit un écart entre le volume déterminé d'après les données fournies par le codeur et le volume de liquide effectivement prélevé ou refoulé par la pipette.

Par ailleurs, dans le but de réaliser un dispositif de pipetage dont la fiabilité et la durée de vie est du même ordre que la seringue de pipetage, la Demanderesse a réalisé un dispositif de pipetage comprenant au moins deux unités de pompage comprenant chacune une cavité cylindrique à l'intérieur de laquelle coulisse, avec étanchéité, un ensemble tige/piston qui délimite avec la cavité une chambre de travail dont le volume varie en fonction de la position axiale de l'ensemble tige/piston.

Les extrémités des deux tiges/pistons ressortant des deux cavités sont accouplées à un organe d'actionnement entraîné en translation par une motorisation commune.

La chambre de travail de chacune des unités de pompage est, par ailleurs, connectée à un circuit comprenant successivement un conduit débouchant dans une réserve de liquide de rinçage, deux électrovannes successives et un tuyau, éventuellement souple, raccordé à des moyens de pipetage, par exemple une aiguille.

La plus grande chambre de travail se trouve alors connectée dans la partie de circuit assurant la jonction entre les deux électrovannes, tandis que l'autre chambre de travail est connectée dans la partie de circuit située entre la deuxième électrovanne et les moyens de pipetage.

Ce dispositif comprend en outre des moyens de commande de la motorisation et des électrovannes conçues de manière à assurer un cycle comprenant au moins :
- une phase de pipetage dans laquelle la première électrovanne est ouverte, la deuxième électrovanne est fermée et la motorisation entraîne en translation les deux ensembles tige/piston de manière à accroître le volume des deux chambres de travail, l'accroissement de volume de la petite chambre engendrant l'aspiration du liquide à analyser ou du réactif dans les moyens de pipetage, tandis que l'accroissement de volume de la grande chambre provoquant l'aspiration du liquide de rinçage à l'intérieur de cette chambre,
- une phase de refoulement dans laquelle les deux électrovannes sont dans le même état que lors de la phase de pipetage, la motorisation agissant alors de manière à provoquer une réduction des volumes desdites chambres de travail et un refoulement du liquide à analyser ou du réactif,
- une phase de rinçage dans laquelle la première électrovanne est fermée tandis que la deuxième est ouverte ; la motorisation entraînant en translation les deux ensembles tige/piston de manière à réduire le volume des deux chambres de travail en expulsant le liquide de rinçage qu'elles contiennent vers les moyens de pipetage.

Pour supprimer les inconvénients dus aux jeux mécaniques, l'invention prévoit une électrovanne supplémentaire disposée dans le circuit reliant la deuxième unité de pompage à la pipette et de n'effectuer l'ouverture de cette électrovanne pour n'exécuter la phase de prélèvement et/ou de refoulement que lorsque les ensembles tige/piston sont en cours de déplacement, dans un sens ou dans l'autre, après les phases transitoires de mise en marche ou d'inversion et/ou les phases transitoires d'arrêt.
Grâce à cette mesure, on s'assure que les dentures des pignons et de la crémaillère de la chaîne cinématique qui engrènent mutuellement, sont fermement en appui les unes contre les autres et donc que le jeu mécanique (même s'il existe) ne se manifeste pas pendant ces périodes.

Bien entendu, le dispositif selon l'invention pourra comprendre un nombre n d'unités de pompage dont les ensembles tige/piston sont connectés à un même organe d'actionnement et dont les chambres de travail sont respectivement connectées à un circuit comprenant un nombre n d'électrovannes en série respectivement connectées dans les parties de circuit assurant les jonctions entre les électrovannes pour ce qui concernent les n-1 premières vannes, la chambre de travail de la n^{ième} vanne, de petite dimension, étant quant à elle connectée aux moyens de pipetage par l'intermédiaire d'un circuit comportant une n+1^{ième} électrovanne. Les susdits moyens de commande sont alors conçus de manière à ce que dans chacune des susdites phases un nombre déterminé i d'électrovannes se trouvent à l'état fermé tandis que les autres vannes, soit un nombre n-i, se trouvent à l'état ouvert.

Avantageusement, le dispositif selon l'invention pourra comprendre une pluralité de modules comprenant chacun une unité de pompage du type susdit dont la chambre de travail est reliée à une portion de circuit incluant une électrovanne. Cette portion de circuit comprend alors à chacune de ses extrémités des moyens de connexion à la portion de circuit d'un autre module et/ou au conduit débouchant dans la réserve de liquide de rinçage et/ou au tuyau raccordé aux moyens de pipetage. Les moyens d'accouplement entre la motorisation et les ensembles tige/piston sont alors conçus pour permettre l'accouplement du nombre de modules désirés.

Des modes d'exécution de l'invention seront décrits ci-après, à titre d'exemples non limitatifs, avec référence aux dessins annexés dans lesquels :
La figure 1 est un schéma de principe d'un dispositif de pipetage selon l'invention utilisant deux seringues ;
La figure 2 est un chronogramme d'une séquence complète de fonctionnement du dispositif de pipetage représenté figure 1 ;
La figure 3 est le chronogramme d'une variante de séquence simplifiée de fonctionnement du dispositif de pipetage représenté figure 1 ;
La figure 4 est une vue en coupe schématique d'un mode d'exécution du dispositif représenté figure 1 ;
La figure 5 est une vue en perspective éclatée du mode d'exécution illustré sur la figure 4 ;
La figure 6 est une vue en perspective du dispositif de la figure 5 à l'état assemblé ;
La figure 7 est une coupe schématique d'un ensemble de pompage modulaire utilisable dans un dispositif de pipetage selon l'invention ;
La figure 8 est une représentation schématique de l'ensemble de pompage de la figure 6.

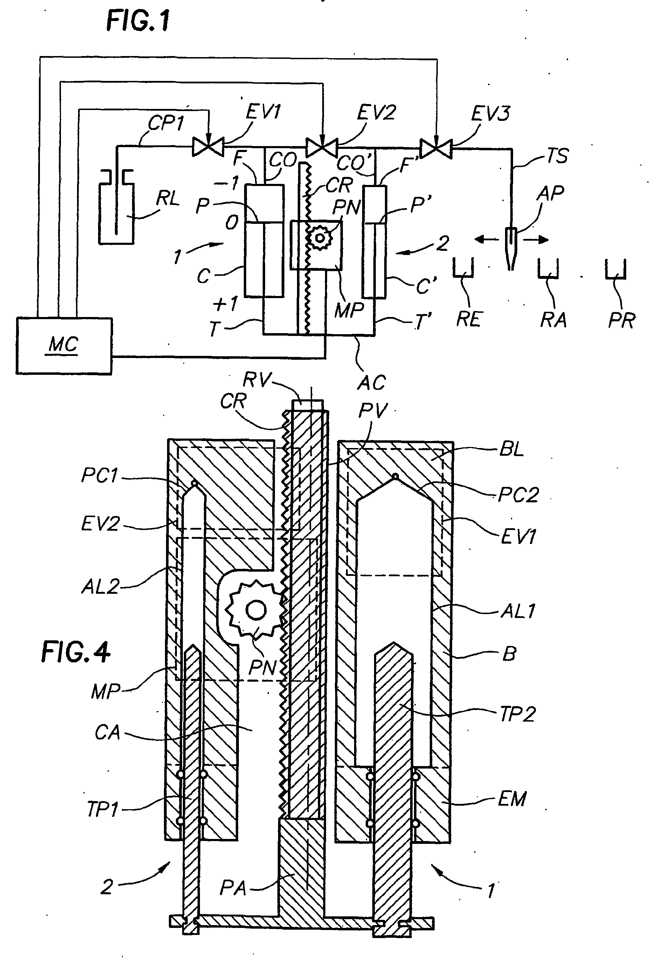

Dans l'exemple représenté sur la figure 1, le dispositif de pipetage comprend deux unités de pompage 1, 2 comprenant chacune un corps cylindrique C, C' dans lequel se déplace un piston P, P' qui délimite avec un fond F, F' une chambre de travail de volume variable.

Ce piston est solidaire d'une tige T, T' ressortant du corps, du côté opposé au fond F, et qui est couplée à un mécanisme d'actionnement en translation faisant intervenir :
- une pièce d'accouplement AC sur laquelle les tiges T et T' viennent se fixer (il existe un jeu entre T, T' et AC pour pallier les défauts de parallélisme),
- une crémaillère CR solidaire de la pièce d'accouplement AC qui s'étend parallèlement à l'axe des corps cylindriques C, C',
- un pignon PN entraîné par un moteur pas à pas MP qui engrène avec la crémaillère CR.

Le fond de chacun des corps C, C' est muni d'un conduit CO, CO' faisant communiquer la chambre de travail correspondante avec un circuit comprenant en série, un conduit CP₁ débouchant dans une réserve de liquide de rinçage RL, trois électrovannes successives EV₁, EV₂ et EV₃ et un tuyau souple TS raccordant l'électrovanne EV₃ à une aiguille de pipetage mobile AP.

Cette aiguille AP est actionnée de manière à pouvoir s'engager dans divers récipients tels que, par exemple, une réserve RE contenant un échantillon ou un réactif, un récipient d'analyse RA et un puits de rinçage PR.

D'une façon plus précise, le conduit CO est raccordé au circuit reliant les électrovannes EV₁, EV₂. Le conduit CO' débouche quant à lui dans la portion de circuit assurant la liaison entre l'électrovanne EV₂ et l'électrovanne EV₃.

La commande des électrovannes EV₁, EV₂, EV₃ et du moteur MP est assurée par un microcontrôleur MC, un capteur optique fournissant la position "zéro" du système.

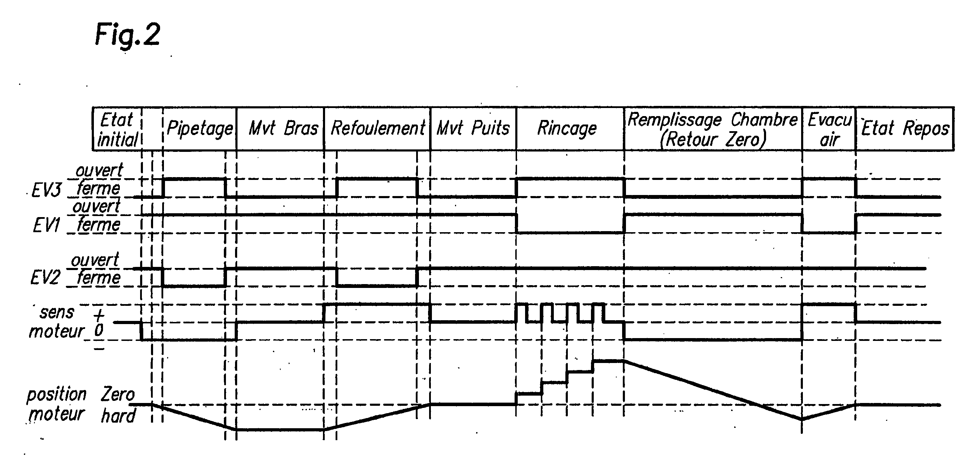

Le fonctionnement du dispositif de pipetage précédemment mentionné sera décrit ci-après en regard du chronogramme de la figure 2.

Selon ce chronogramme, à l'état initial, l'aiguille AP est engagée dans la réserve RE, les vannes EV₁, EV₂ se trouvent en position ouverte tandis que la vanne EV₃ est en position fermée. Le moteur MP est à l'arrêt, les pistons étant en position de repos (position 0). Les deux chambres de travail des unités de pompage 1, 2 sont remplies de liquide de rinçage.

Au cours d'une phase transitoire précédant le pipetage, le moteur MP est entraîné en rotation dans le sens négatif de manière à entraîner les deux pistons P, P' vers le bas. Ce déplacement crée une aspiration du liquide de rinçage dans les deux chambres de travail. L'incidence du jeu présent dans la chaîne cinématique (qui provoque un léger décalage dans l'aspiration) n'a aucune incidence sur le fonctionnement du dispositif.

La phase de pipetage est ensuite obtenue en fermant la vanne EV₂ et en ouvrant la vanne EV₃. Dans ce cas, le piston P' crée une aspiration du liquide contenu dans la réserve RE, à l'intérieur de l'aiguille AP et une partie du tuyau souple TS tandis que le piston P aspire le liquide de rinçage contenu dans la réserve RL.

En fin de pipetage, le dispositif passe par une deuxième phase transitoire marquée par la fermeture de la vanne EV₃ et l'ouverture de la vanne EV₂, de sorte que le pipetage est terminé tandis que le moteur qui continue à tourner provoque l'aspiration par les deux chambres du liquide de rinçage en provenance du récipient RL.

A la fin de cette deuxième phase transitoire, le moteur MP est stoppé et l'aiguille AP est déplacée par exemple pour venir se disposer au-dessus du récipient d'analyse RA.

Une fois cette position atteinte, le dispositif entame une troisième phase transitoire dans laquelle le moteur MP tourne dans le sens inverse (sens positif) de manière à entraîner les pistons P, P' vers leurs positions de repos (position 0). Au cours de cette phase transitoire, la vanne EV₃ reste fermée tandis que les vannes EV₁ et EV₂ sont ouvertes pour permettre un refoulement du liquide de rinçage vers le récipient RL.

La phase de refoulement est alors initiée en ouvrant la vanne EV₃ et en refermant la vanne EV₂, la vanne EV₁ demeurant ouverte. Au cours de cette phase, le piston P' refoule le liquide préalablement prélevé dans l'aiguille AP, à l'intérieur du récipient RA, tandis que le piston P refoule le liquide de rinçage à l'intérieur du récipient RL.

La phase de refoulement se termine par la fermeture de la vanne EV₃ et par l'ouverture de la vanne EV₂, la vanne EV₁ demeurant ouverte.

Le moteur continue de tourner pendant une quatrième phase transitoire puis est stoppé.

Le dispositif entame alors une phase au cours de laquelle l'aiguille AP est amenée au droit du puits de rinçage pour permettre l'exécution d'une phase de rinçage.

Au début de cette nouvelle phase, la vanne EV₁ est fermée tandis que les vannes EV₂ et EV₃ sont ouvertes. Le moteur MP est actionné de manière à refouler le liquide de rinçage contenu dans les deux seringues en direction de l'aiguille de pipetage.

En fait, ce refoulement s'effectue en plusieurs paliers correspondant chacun à un ou plusieurs pas du moteur MP.

Une fois la phase de rinçage effectuée, le dispositif entame une phase de retour à zéro avec remplissage des chambres avec du liquide de rinçage. A cet effet, les vannes EV₁ et EV₂ sont ouvertes tandis que la vanne EV₃ est fermée. Le moteur tourne en sens inverse (sens négatif) de manière à rappeler les pistons légèrement au-delà de la position de repos (position 0) en aspirant du liquide de rinçage en provenance du récipient RL.

Le dispositif procède ensuite à une phase d'évacuation d'air de l'aiguille AP en ouvrant les vannes EV₂ et EV₃ et en fermant la vanne EV₁ et en faisant tourner le moteur MP dans le sens positif de manière à provoquer un refoulement de liquide de rinçage vers l'aiguille de pipetage AP et à amener les pistons et TP₂ en position de repos.

Une fois cette phase d'évacuation d'air effectuée, le dispositif retourne en position de repos. L'électrovanne EV₃ est alors fermée tandis que les électrovannes EV₁ et EV₂ sont ouvertes.

Le dispositif est alors prêt à effectuer un nouveau cycle de fonctionnement.

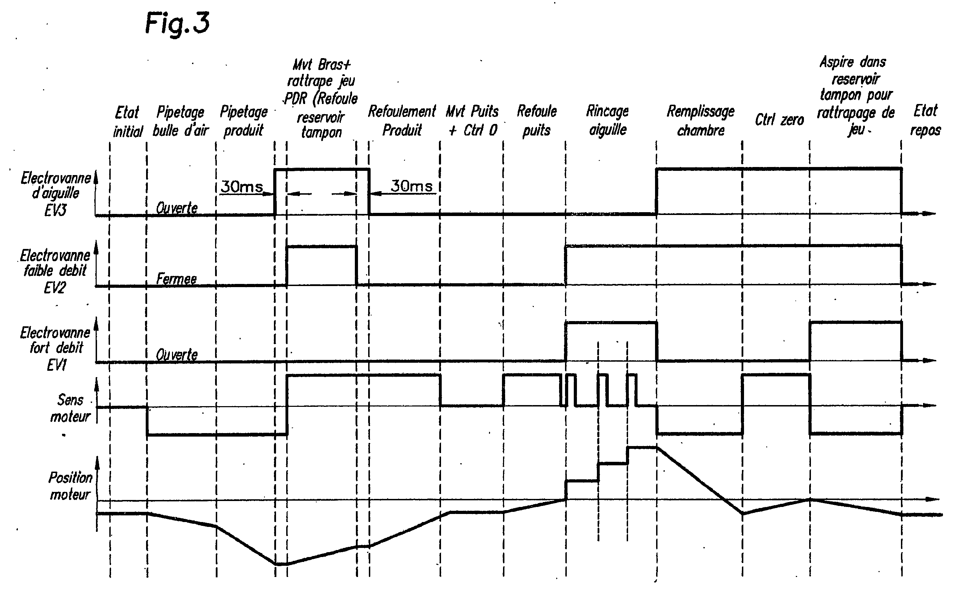

Dans la séquence simplifiée illustrée sur la figure 3, à l'état initial les vannes EV₁ et EV₃ sont ouvertes tandis que la vanne EV₂ est fermée. En fait, il s'agit des positions de repos (état non excité) de ces vannes. Le moteur est à l'arrêt et sa position angulaire est située légèrement au-dessous de sa position zéro.

A partir de cet état initial, le moteur est entraîné en rotation dans le sens négatif de sorte que le piston P' engendre une aspiration dans la pipette (pipetage d'une bulle d'air) tandis que le piston P engendre une aspiration du liquide de rinçage présent dans la réserve RL.

La pipette est alors engagée dans la réserve de réactif tandis que la rotation du moteur en sens négatif est accélérée. On obtient alors une phase de pipetage qui va se poursuivre pendant une durée prédéterminée au cours de laquelle le réactif est aspiré dans la pipette grâce à l'action du piston P'. Cette phrase de pipetage se termine par l'arrêt du moteur, par la fermeture de la vanne EV₃ puis de la vanne EV₂ 30 ms plus tard. Le moteur amorce une phase transitoire d'inversion de sens de rotation d'une durée relativement courte.

Le liquide de rinçage, refoulé par les pistons retourne alors à la réserve RL.

Une fois, le rattrapage de jeu terminé, la vanne EV₂ est fermée et la vanne EV₃ est ouverte 30 ms plus tard.

La pipette est alors déplacée de manière à être amené au droit du récipient d'analyse RA. Une fois cette position atteinte, le dispositif entame une phase de refoulement du produit dans le récipient d'analyse RA, la rotation du moteur étant accélérée dans le sens positif.
Cette phase de refoulement se termine par l'arrêt du moteur.

La pipette est alors amenée au droit du puits de rinçage tandis que l'on effectue un contrôle de la position zéro du moteur.

Le moteur est ensuite entraîné dans le sens positif pour effectuer un refoulement du liquide contenu dans la pipette, dans le puits.

Le dispositif entame ensuite une phase de rinçage dans laquelle les vannes EV₂ et EV₃ sont ouvertes tandisque la vanne EV₁ est fermée.
Au cours de cette phase, le moteur effectue une succession de mouvements de rotation dans le sens positif de manière à obtenir un refoulement en plusieurs paliers correspondant chacun à un ou plusieurs pas de moteur.

En fin de rinçage, la vanne EV₃ est fermée tandis que les vannes EV₁ et EV₂ sont ouvertes. Le moteur est entraîné en rotation dans le sens négatif de manière à provoquer une aspiration de liquide de rinçage par les pistons P et P'. Cette phase se poursuit jusqu'à ce que la position du moteur se situe légèrement au-dessous du niveau zéro.

Ce dispositif entame alors une phase de contrôle de zéro au cours de laquelle le moteur est entraîné en rotation dans le sens positif jusqu'à ce que la position zéro soit détectée.
La vanne EV₁ est alors refermée et le moteur est entraîné en rotation dans le sens négatif jusqu'à ce le moteur revienne à une position située légèrement au-dessous du niveau zéro (rattrapage de jeu).

Le cycle est alors terminé et le dispositif retourne à l'état initial, les vannes EV₁ et EV₃ étant ouvertes, la vanne EV₂ étant fermée, le moteur MP étant à l'arrêt.

Avantageusement, le dispositif précédemment décrit pourra être dimensionné de manière à pouvoir être compatible avec les automates d'analyse actuellement utilisés.

A titre d'exemple, dans ce dispositif utilisé sur un automate tel que celui décrit dans FR 2 779 827 :
- le volume minimum à pipeter pourra être égal à 5 µl, le volume maximum étant égal à 250 µl, (ce volume étant déterminé en réglant le nombre de pas du moteur lors des phases d'aspiration etde recouvrement),
- pour la fonction reconstitution des réactifs, le volume maximum à pipeter pourra être égal à 8 ml,
- le débit de démarrage pourra être de 24,4 µl/s ou de 73,2 µl/s, le débit haut étant de l'ordre de 366 µl/s,
- le dispositif pourra être à même d'effectuer 10 coups de rinçage successifs avec un volume de 150 µl avec une durée de 100 ms par coup de rinçage, la pression des paliers de rinçage pourra être de 3 bars,
- lé moteur MP utilisé peut consister en un motoréducteur pas à pas, comprenant 200 pas par tour,
- le diamètre du piston du corps de l'unité de pipetage 1 pourra être égal à 14 mm, tandis que le diamètre du piston du corps de l'unité de pipetage 2 pourra être de 3 mm,
- la longueur des deux alésages pourra être de 55 mm.

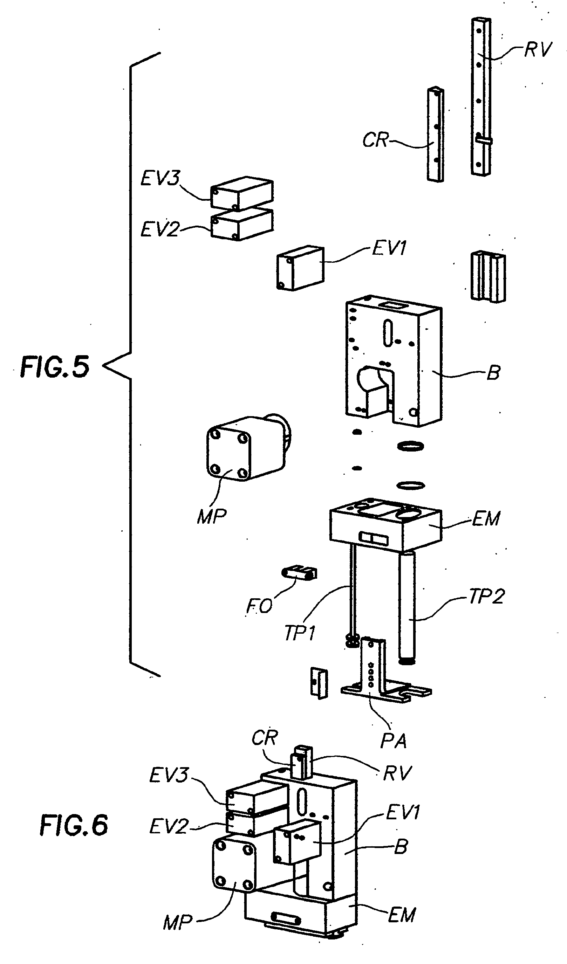

Dans l'exemple illustré sur les figures 4, 5 et 6, les corps des deux unités de pipetage 1, 2 sont intégrés dans un même bloc BL en matière plastique, par exemple en Plexiglas (marque déposée) ; de forme sensiblement parallélépipédique.

Ce corps comprend deux alésages AL₁ et AL₂ axés parallèlement à l'axe vertical de symétrie du bloc qui débouchent à l'extérieur au niveau de la face inférieure du bloc. Dans leurs parties supérieures, ces deux alésages se terminent par deux portions coniques PC₁, PC₂ respectives situées à une distance prédéterminée de la face supérieure.

Dans le volume compris entre les deux alésages AL₁, AL₂ est prévue une cavité CA débouchant sur la face inférieure et sur la face antérieure, ainsi qu'un passage vertical PV s'étendant entre la face supérieure de la cavité CA et la face supérieure du bloc.

Sur la face inférieure du bloc est fixée une embase EM comprenant deux passages verticaux traversants dans lesquels sont montés coulissant, avec étanchéité, deux tige/piston respectives TP₁, TP₂, par exemple en acier inoxydable, qui s'engagent respectivement dans les alésages AL₁, AL₂, l'étanchéité coulissante étant ici obtenue à l'aide de joints d'étanchéité dynamique.

Les extrémités supérieures de ces tige/piston sont coniques tandis que leurs extrémités inférieures comprennent deux gorges respectives permettant leur fixation démontable aux extrémités de la branche horizontale d'une pièce d'actionnement PA en forme de T inversé.

La branche verticale de cette pièce d'actionnement PA est fixée à l'extrémité inférieure d'un rail vertical RV, mobile en translation verticale, qui passe dans la cavité grâce à un orifice prévu dans l'embase puis par le passage PV.

Ce rail RV porte une crémaillère CR sur laquelle engrène un pignon PN actionné par un motoréducteur (bloc en points interrompus MP) et qui se trouve logé dans la cavité.

Par ailleurs, trois électrovannes EV₁, EV₂, EV₃ sont montées sur la face antérieure du corps, en communication avec des conduits réalisés dans le bloc B, conformément au circuit représenté sur la figure 1.

Une fourche optique FO est en outre prévue pour effectuer la détection de la position "zéro" du rail RV.

Le fonctionnement de ce dispositif est identique à celui précédemment décrit et ne sera donc pas exposé à nouveau.

Néanmoins, il s'avère que cette solution est particulièrement avantageuse en raison de sa compacité, sa facilité d'intégration, de son aptitude à éliminer les bulles grâce aux formes coniques, de sa précision qui dépend de celle des tige/piston TP₁, TP₂ qui sont usinables à très haute précision et de sa fiabilité.

En particulier, l'élimination des bulles est due à la fois aux formes coniques des tige/piston TP₁, TP₂ et des alésages cylindriques AL₁, AL₂ ainsi qu'à l'état de surface de ces éléments. Par ailleurs, le passage des bulles est facilité grâce au fait que la forme conique PC₁ de l'alésage cylindrique AL₂ de plus petit diamètre communique directement avec le conduit raccordé aux moyens de pipetage AP.

Bien entendu, l'invention ne se limite pas à une telle solution.

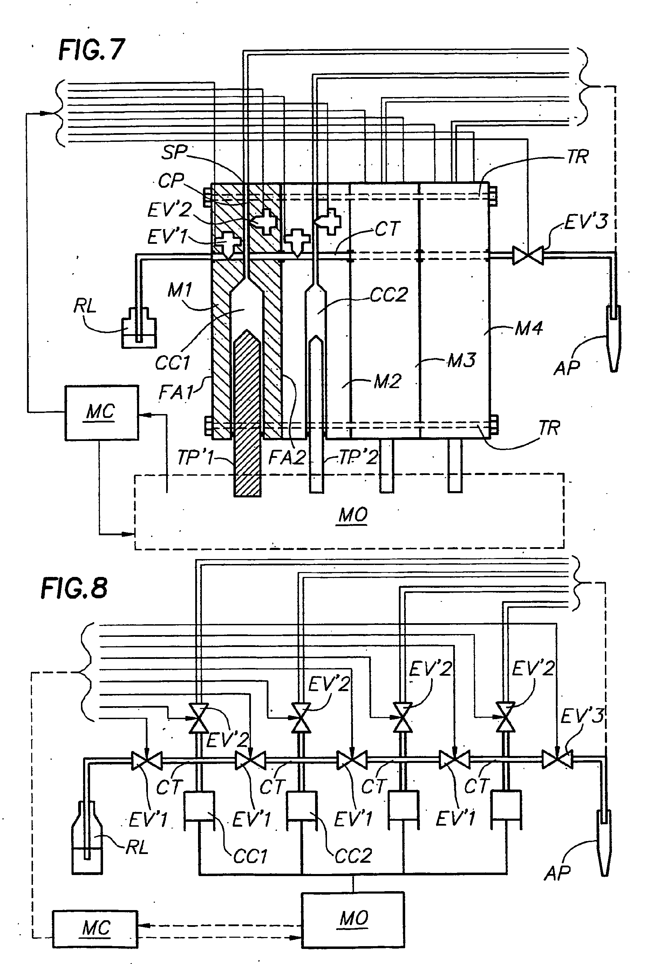

Elle propose également un dispositif modulaire mettant en oeuvre des modules de pompage pouvant s'assembler les uns aux autres de la façon indiquée sur les figures 7 et 8.

Dans cet exemple, chaque module M₁ à M₄ comprend une cavité cylindrique CC₁, CC₂ dans laquelle peut coulisser avec étanchéité une tige/piston TP'₁, TP'₂ actionnée par une motorisation (bloc MO) commune à toutes les tige/piston TP'₁, TP'₂.

Ce module comprend un corps présentant deux faces d'assemblage parallèle FA₁, FA₂ dans lesquelles débouche un conduit traversant CT, en communication avec la cavité cylindrique CC₁ et dont une portion est obturable par un pointeau actionné par un électroaimant (l'ensemble constituant une électrovanne EV'₁).

Au niveau des faces d'assemblage, les orifices de ce conduit CT sont équipés de moyens de connexion permettant d'assurer un raccordement étanche des tronçons de conduits CT de plusieurs modules lorsque ces derniers sont assemblés les uns aux autres par leurs faces d'assemblage et fixés dans cette position, par exemple par des tirants TR.

D'une façon analogue à la précédente, le conduit obtenu par le raccordement des différents conduits traversants CT est raccordé d'un côté au récipient de liquide de rinçage RL et, de l'autre côté, à une aiguille de pipetage AP par l'intermédiaire d'une électrovanne EV'₃.

Les électrovannes EV'₁, EV'₂ et EV'₃ ainsi que la motorisation MO sont quant à elles connectées à un circuit de commande à microprocesseur MC.

Par ailleurs, chacun des modules M₁ à M₄ comprend en outre un conduit CP en communication avec la cavité cylindrique CC₁ et qui débouche sur la face supérieure du module par un orifice constituant une sortie parallèle SP. Ce conduit CP est obturable par un pointeau commandé par un électroaimant, l'ensemble formant une électrovanne EV'₂ similaire aux électrovannes EV'₁ et commandée par le circuit de commande.

Ces sorties parallèles SP peuvent être connectées à l'aiguille de pipetage AP par l'intermédiaire d'un collecteur commun.

Il est clair que cette structure modulaire bénéficie d'une très grande souplesse et peut s'adapter à de très nombreuses situations, en faisant varier le nombre des modules en choisissant des modules présentant des cavités de diamètre approprié, en effectuant des regroupements de modules dont les électrovannes présentent les mêmes états, en sélectionnant les sorties les plus appropriées aux fonctions que l'on veut exécuter etc... Bien entendu, cette sélection peut être assurée par un programme implémenté par le circuit de commande MC.

## Revendications

1. Dispositif de pipetage automatique de précision avec rinçage de la pipette, ce dispositif comprenant au moins deux unités de pompage de capacité différente, comportant chacune une cavité cylindrique (AL₁, AL₂) à l'intérieur de laquelle coulisse avec étanchéité un ensemble tige/piston (TP₁, TP₂) qui délimite avec ladite cavité une chambre de travail dont le volume varie en fonction de la position axiale de l'ensemble tige/piston (TP₁, TP₂), les extrémités des deux ensembles tige/piston (TP₁, TP₂) qui ressortent des deux cavités étant accouplées à un organe d'actionnement entraîné en rotation par une motorisation commune (MO et MP), la chambre de travail de chacune des unités de pompage (1, 2) étant connectée à un circuit comprenant successivement un conduit débouchant dans une réserve de liquide de rinçage (RL), deux électrovannes successives (EV₁, EV₂) et une portion de circuit reliant la deuxième électrovanne (EV₂) à des moyens de pipetage (AP), la plus grande chambre de travail étant connectée dans la partie du circuit assurant la liaison entre les deux électrovannes (EV₁, EV₂) tandis que la deuxième chambre de travail est connectée à la susdite portion de circuit au moyen d'un raccord,
**caractérisé en ce que** cette portion de circuit comprend une électrovanne (EV₃) située entre ledit raccord et les susdits moyens de pipetage, lesdites électrovannes et ladite motorisation étant commandées par des moyens de commande conçus de manière à obtenir un cycle de pipetage comportant au moins une séquence d'aspiration dans laquelle le moteur tourne en continu dans le sens négatif de manière à provoquer une aspiration du liquide de rinçage dans les deux chambres, cette séquence comportant au moins les phases successives suivantes :
- une phase transitoire dans laquelle la première vanne (EV₁) est en position ouverte,
- une phase de prélèvement d'un échantillon dans laquelle la deuxième vanne (EV₂) est fermée et la troisième vanne (EV₃) est ouverte,
- une phase de fin de prélèvement de l'échantillon qui comprend la fermeture de la troisième vanne (EV₃).

2. Dispositif selon la revendication 1,
**caractérisé en ce que**, pendant le susdit cycle de pipetage, lors de la susdite phase transitoire, les deux premières vannes (EV₁, EV₂) sont ouvertes tandis que la troisième vanne (EV₃) est en position fermée et, lors de la susdite phase de fin de prélèvement de l'échantillon, la troisième vanne (EV₃) est fermée et la deuxième vanne (EV₂) est ouverte.

3. Dispositif selon la revendication 2,
**caractérisé en ce que** le susdit cycle de pipetage comprend une séquence de refoulement dans laquelle le moteur tourne dans le sens positif de manière à provoquer un refoulement du liquide de rinçage dans les deux chambres, cette séquence comprenant les phases successives suivantes :
- une phase transitoire dans laquelle la troisième vanne (EV₃) est fermée tandis que les deux premières vannes (EV₁, EV₂) sont ouvertes pour permettre un refoulement du liquide de rinçage contenu dans les chambres vers le récipient (RL),
- une phase de refoulement dans laquelle la troisième vanne (EV₃) est ouverte tandis que la deuxième vanne (EV₂) est fermée, la première vanne (EV₁) demeurant ouverte pour permettre de refouler le produit dans le récipient d'analyse,
- une phase de fin de refoulement comprenant la fermeture de la troisième vanne (EV₃) et l'ouverture de la deuxième vanne (EV₂), la vanne (EV₁) demeurant ouverte.

4. Dispositif selon la revendication 3,
**caractérisé en ce que** le susdit cycle de pipetage comprend une phase de rinçage au cours de laquelle la première vanne (EV₁) est fermée tandis que les deuxième et troisième vannes (EV₂ et EV₃) sont ouvertes, le moteur (MP) étant actionné pas à pas de manière à refouler le liquide de rinçage contenu dans les deux seringues en direction des moyens de pipetage.

5. Dispositif selon la revendication 4,
**caractérisé en ce que** le susdit cycle de pipetage comprend une phase de retour à zéro comportant le remplissage des chambres avec du liquide de rinçage, les deux premières vannes (EV₁, EV₂) étant ouvertes tandis que la troisième vanne (EV₃) est fermée, le moteur tournant dans le sens négatif de manière à rappeler les pistons en dessous de la position "zéro", puis une phase d'évacuation d'air des moyens de pipetage en ouvrant les deuxième et troisième vannes (EV₂ et EV₃) et en fermant la première vanne (EV₁) le moteur tournant dans le sens positif de manière à provoquer un refoulement du liquide de rinçage vers les moyens de pipetage (AP) et à amener les pistons (TP₁, TP₂) en position de repos, la troisième électrovanne (EV₃) étant ensuite fermée tandis que les premières électrovannes (EV₁ et EV₂) sont ouvertes.

6. Dispositif selon la revendication 1,
**caractérisé en ce que**, pendant le susdit cycle de pipetage, lors de la susdite phase transitoire, les deuxième et troisième vannes (EV₁, EV₃) sont ouvertes et la deuxième vanne (EV₂) est fermée et, lors de la susdite phase de fin de prélèvement de l'échantillon, la vanne EV₃ est fermée et le moteur amorce une phase transitoire d'inversion de sens de rotation.

7. Dispositif selon la revendication 6,
**caractérisé en ce que** le susdit cycle de pipetage comprend une séquence de refoulement avec, d'une part, un refoulement du liquide de rinçage dans les deux chambres et, d'autre part, un refoulement de l'échantillon dans le récipient d'analyse, cette séquence comprenant les phases successives suivantes :
- une phase où les première et deuxième vannes (EV₁, EV₂) sont ouvertes et la troisième vanne (EV₃) est fermée pour permettre un refoulement du liquide de rinçage contenu dans les chambres vers le récipient (RL),
- une phase transitoire de rattrapage de jeu dans laquelle la deuxième vanne (EV₂) est fermée, la première vanne (EV₁) demeurant ouverte et la troisième vanne fermée,
- une phase dans laquelle la troisième vanne (EV₃) est ouverte tandis que la première vanne (EV₁) demeure ouverte et la deuxième vanne (EV₂) fermée pour permettre de refouler le produit dans le récipient d'analyse (RA),
- une phase de contrôle de la position zéro du moteur.

8. Dispositif selon la revendication 7,
**caractérisé en ce que** le susdit cycle de pipetage comprend une séquence de rinçage au cours de laquelle le liquide contenu dans la pipette est refoulé dans le puits de rinçage puis les deuxième et troisième vannes (EV₂, EV₃) sont ouvertes tandis que la première vanne (EV₁) est fermée, le moteur étant actionné pas à pas de manière à obtenir un refoulement en plusieurs paliers.

9. Dispositif selon la revendication 8,
**caractérisé en ce que** le susdit cycle de pipetage comprend une phase de retour à l'état initial comportant :
- le remplissage des chambres avec du liquide de rinçage, les première et deuxième vannes (EV₁, EV₂) étant ouvertes et la troisième vanne (EV₃) fermée, le moteur tournant dans le sens négatif jusqu'à une position légèrement au-dessous du niveau zéro,
- une phase de contrôle de zéro au cours de laquelle le moteur est entraîné en rotation dans le sens positif jusqu'à ce que la position zéro soit détectée,
- une phase de rattrapage du jeu dans laquelle la première vanne (EV₁) est refermée et le moteur est entraîné en rotation dans le sens négatif jusqu'à ce qu'il revienne à une position située légèrement au-dessous du niveau zéro,
- une phase finale de retour à l'état initial dans laquelle les première et troisième vannes (EV₁, EV₃) sont ouvertes tandis que la deuxième vanne (EV₂) est fermée, le moteur étant à l'arrêt.

10. Dispositif selon l'une des revendications précédentes,
**caractérisé en ce que** les cavités cylindriques (AL₁, AL₂) des deux unités de pompage (1, 2) sont réalisées dans un même bloc (B) de matière.

11. Dispositif selon l'une des revendications précédentes,
**caractérisé en ce que** la susdite motorisation comprend un moteur (MP) entraînant un pignon (PN) qui engrène avec une crémaillère (CR) solidaire du susdit organe d'actionnement.

12. Dispositif selon l'une des revendications précédentes,
**caractérisé en ce que** les extrémités supérieures des cavités cylindriques (AL₁, AL₂) et des ensembles tige/piston (TP₁, TP₂) sont coniques.

13. Dispositif selon la revendication 12,
**caractérisé en ce que** la forme conique (PC₁) de la cavité cylindrique (AL₁) la plus petite communique directement avec le conduit raccordé aux moyens de pipetage (AP).

14. Dispositif selon la revendication 1,
**caractérisé en ce que** les susdites unités de pompage consistent en des modules (M₁ à M₄) comprenant chacun un corps présentant deux faces d'assemblage parallèles (FA₁, FA₂) dans lesquelles débouche un conduit traversant (CT) en communication avec la susdite cavité cylindrique (CC₁, CC₂) et dont une portion est obturable par une électrovanne (EV'₁), les orifices dudit conduit étant équipés de moyens de connexion permettant d'assurer un raccordement étanche avec un orifice correspondant d'un autre module (M₁ à M₄), lorsque les deux modules sont assemblés l'un à l'autre par leurs faces d'assemblage et fixés dans cette position à l'aide de moyens de fixation (TR), lesdits orifices pouvant êtres raccordés par ailleurs soit au conduit d'admission de liquide de rinçage, soit au conduit raccordé aux moyens de pipetage (AP).

15. Dispositif selon la revendication 14,
**caractérisé en ce que** chacun des modules (M₁ à M₄) comprend un conduit (CP) en communication avec la cavité cylindrique (CC₁) et qui débouche à l'extérieur par un orifice constituant une sortie parallèle (SP), ledit conduit (CC₁) étant obturable par une électrovanne (EV'₂).

16. Dispositif selon l'une des revendications précédentes,
**caractérisé en ce que** lesdites électrovannes (EV₁, EV₂-EV'₁, EV'₂) et ladite motorisation (MO et MP) sont commandées par un processeur (MC) recevant des informations relatives à la position des ensembles tige/piston (TP₁, TP₂₋TP'₁, TP'₂).

17. Dispositif selon la revendication 16,
**caractérisé en ce que** les susdites informations sont obtenues au moyen d'une fourche optique associée à la susdite crémaillère (CR).

## Claims

1. Automatic precision drawing-off device with rinsing of the pipette, this device comprising at least two pumping units of different capacity, each comprising a cylindrical cavity (AL₁, AL₂) inside which a rod/piston unit (TP₁, TP₂) slides with imperviousness, said unit delimiting with said cavity a working chamber whose volume varies according to the axial position of the rod/piston unit (TP₁, TP₂), the extremities of the two rod/piston units (TP₁, TP₂) which come out of the two cavities being coupled to an activation member driven in rotation by a common motorisation (MO and MP), the working chamber of each of the pumping units (1, 2) being connected to a circuit successively comprising a pipe opening into a rinsing liquid reserve (RL), two successive electrovalves (EV₁, EV₂) and a circuit portion connecting the second electrovalve (EV₂) to drawing-off means (AP), the largest working chamber being connected into the circuit portion providing the link between the two electrovalves (EV₁, EV₂) whereas the second working chamber is connected to said circuit portion by means of a connector,
**characterised in that** this circuit portion comprises an electrovalve (EV₃) situated between said connector and said drawing-off means, said electrovalves and said motorisation being controlled by control means designed so as to obtain a drawing-off cycle comprising at least one suction sequence in which the motor rotates continuously in a negative direction so as to provoke a sucking up of the rinsing liquid in the two chambers, this sequence comprising at least the following successive phases :
- a transitory phase in which the first valve (EV₁) is in an open position,
- a phase for taking a sample in which the second valve (EV₂) is closed and the third valve (EV₃) is open,
- an end of sample taking phase comprising the closing of the third valve (EV₃).

2. Device according to claim 1,
**characterised in that**, during the said drawing-off cycle at the time of said transitory phase, the first two valves (EV₁, EV₂) are open whereas the third valve (EV₃) is in a closed position and at the time of said end of sample taking phase, the third valve (EV₃) is closed and the second valve (EV₂) is open.

3. Device according to claim 2,
**characterised in that** the said drawing-off cycle comprises a flowing back sequence in which the motor rotates in a positive direction so as to provoke a flowing back of the rinsing liquid in the two chambers, this sequence comprising the following successive phases :
- a transitory phase in which the third valve (EV₃) is closed whereas the first two valves (EV₁, EV₂) are open so as to allow a flowing back of the rinsing liquid contained in the chambers towards the receptacle (RL),
- a flowing back phase in which the third valve (EV₃) is open whereas the second valve (EV₂) is closed, the first valve (EV₁) remaining open so as to enable the product to flow back into the analysis receptacle,
- an end of flow back phase comprising the closing of the third valve (EV₃) and the opening of the second valve (EV₂), the valve (EV₁) remaining open.

4. Device according to claim 3,
**characterised in that** the said drawing-off cycle comprises a rinsing phase during which the first valve (EV₁) is closed whereas the second and third valves (EV₂, EV₃) are open, the motor (MP) being activated step by step so as to push back the rinsing liquid contained in the two syringes in the direction of the drawing-off means.

5. Device according to claim 4,
**characterised in that** the said drawing-off cycle comprises a return to zero phase comprising the filling of the chambers with the rinsing liquid, the first two valves (EV₁, EV₂) being open whereas the third valve (EV₃) is closed, the motor rotating in a negative direction so as to bring back the pistons below the "zero" position, followed by a phase for evacuating air from the drawing-off means by opening the second and third valves (EV₂, EV₃) and by closing the first valve (EV₁), the motor rotating in a positive direction so as to provoke a flowing back of the rinsing liquid towards the drawing-off means (AP) and to bring back the pistons (TP₁, TP₂) into an idle position, the third electrovalve (EV₃) then being closed whereas the first electrovalves (EV₁, EV₂) are open.

6. Device according to claim 1,
**characterised in that**, during said drawing-off cycle, at the time of the said transitory phase, the second and third valves (EV₁, EV₃) are open and the second valve (EV₂) is closed, and at the time of said end of sample taking phase, the valve EV₃ is closed and the motor starts an inversion of direction of rotation transitory phase.

7. Device according to claim 6,
**characterised in that** the said drawing-off cycle comprises a flowing back sequence with first a flowing back of the rinsing liquid into the two chambers, and secondly a flowing back of the sample into the analysis receptacle, this sequence comprising the following successive phases :
- a phase where the first and second valves (EV₁, EV₂) are open and the third valve (EV₃) is closed to allow a flowing back of the rinsing liquid contained in the chambers towards the receptacle (RL),
- a transitory free motion adjustment phase in which the second valve (EV₂) is closed, the first valve (EV₁) remaining open and the third valve closed,
- a phase in which the third valve (EV₃) is open whereas the first valve (EV₁) stays open and the second valve (EV₂) is closed to enable the product to flow back into the analysis receptacle (RA),
- a phase for controlling the zero position of the motor.

8. Device according to claim 7,
**characterised in that** the said drawing-off cycle comprises a rinsing sequence during which the liquid contained in the pipette is pushed back into the rinsing well, the second and third valves (EV₂, EV₃) being open whereas the first valve (EV₁) is closed, the motor being activated step by step so as to obtain a flowing back in several stages.

9. Device according to claim 8,
**characterised in that** the said drawing-off cycle comprises a phase for return to an initial state comprising :
- the filling of the chambers with the rinsing liquid, the first and second valves (EV₁, EV₂) being open and the third valve (EV₃) closed, the motor rotating in a negative direction as far as a position slightly below the zero level,
- a zero control phase during which the motor is driven in rotation in a positive direction until the zero position is detected,
- a free motion adjustment phase in which the first valve (EV₁) is closed again and the motor is driven in rotation in a negative direction until it comes back to a position situated slightly below the zero level.
- a final phase for return to an initial state in which the first and third valves (EV₁, EV₃) are open whereas the second valve (EV₂) is closed, the motor being at a dead stop.

10. Device according to one of the preceding claims,
**characterised in that** the cylindrical cavities (AL₁, AL₂) of the two pumping units (1, 2) are embodied in a given material block (B).

11. Device according to one of the preceding claims,
**characterised in that** the said motorisation comprises a motor (MP) driving a pinion (PN) which gears with a rack (CR) integral with said activation member.

12. Device according to one of the preceding claims,
**characterised in that** the upper extremities of the cylindrical cavities (AL₁, AL₂) and the rod/piston assemblies (TP₁, TP₂) are conical.

13. Device according to claim 12,
**characterised in that** the conical shape (PC₁) of the smallest cylindrical cavity (AL₁) communicates directly with the pipe connected to the drawing-off means (AP).

14. Device according to claim 1,
**characterised in that** the said pumping units consist of modules (M₁ to M₄) each comprising a body having two parallel assembling faces (FA₁, FA₂) into which a traversing pipe (CT) opens in communication with said cylindrical cavity (CC₁, CC₂) and having one portion able to be sealed off by an electrovalve (EV'₁), the orifices of said pipe being equipped with connection means making it possible to provide a sealed connection with a corresponding orifice of another module (M₁ to M₄) when the two modules are assembled to each other via their assembling faces and fixed in this position with the aid of fixing means (TR), said orifices being able to be moreover connected, either to the rinsing liquid intake pipe or to the pipe connected to the drawing-off means (AP).

15. Device according to claim 14,
**characterised in that** each of the modules (M₁ to M₄) comprises a pipe (CP) in communication with the cylindrical cavity (CC₁) and which opens outside via an orifice constituting a parallel outlet (SP), said pipe (CC₁) being able to be sealed off by an electrovalve (EV'₂).

16. Device according to one of the preceding claims,
**characterised in that** the said electrovalves (EV₁, EV₂ - EV'₁, EV'₂) and said motorisation (MO and MP) are controlled by a processor (MC) receiving information relating to the position of the rod/piston assemblies (TP₁, TP₂ - TP'₁, TP'₂).

17. Device according to claim 16,
**characterised in that** said information is obtained with the aid of an optical fork associated with said rack (CR).

## Patentansprüche

1. Automatische Präzisions-Pipettiervorrichtung mit Spülung der Pipette, wobei diese Vorrichtung mindestens zwei Pumpeinheiten verschiedener Kapazitäten umfasst, mit je einem zylindrischen Hohlraum (AL₁, AL₂) an dessen Innenseite sich eine Schaft-/ Kolben-Anordnung (TP₁, TP₂) bewegt, die mit besagtem Hohlraum eine Arbeitskammer abgrenzt, deren Volumen in Funktion der axialen Position der Schaft-/ Kolben-Anordnung (TP₁, TP₂) die Enden der Schaft-/ Kolben-Anordnung (TP₁, TP₂) variiert, die aus den beiden Hohlräumen herausragen und an ein über einen gemeinsamen Motor (MO und MP) in Rotation angetriebenes Antriebsorgan angekoppelt sind, wobei die Arbeitskammer jeder Pumpeinheiten (1, 2) an ein Leitungsrohr angeschlossen ist und dann eine in eine Spülflüssigkeitsreserve (RL) mündende Leitung umfasst, wobei zwei aufeinanderfolgende Magnetventile (EV₁, EV₂) und ein Teil des Leitungsrohrs das zweite Magnetventil (EV₂) mit Pipettierinstrumenten (AP) verbindet, wobei die größte Arbeitskammer mit dem Leitungsteil verbunden ist, welches die Verbindung zwischen den beiden Magnetventilen (EV₁, EV₂) sichert, da die zweite Arbeitskammer mit dem besagten Leitungsteil mittels eines Anschlusses verbunden ist, **gekennzeichnet dadurch, dass** dieses Leitungsteil ein Magnetventil (EV₃) umfasst, das zwischen besagtem Anschluss und besagten Pipettierinstrumenten liegt, wobei besagte Magnetventile und besagter Motor über Steuerelemente angesteuert werden, die so ausgebildet sind, um einen Pipettierzyklus mit mindestens einer Ansaugsequenz zu erreichen, in welcher sich der Motor kontinuierlich in negativer Richtung dreht, um eine Ansaugung der Spülflüssigkeit in den zwei Kammern zu bewirken, wobei diese Sequenz mindestens folgende aufeinanderfolgende Stufen umfassen:
- Eine Übergangsstufe, in welcher sich das erste Magnetventil (EV₁) in geöffneter Position befindet,
- eine Probeentnahmestufe, in welcher das zweite Magnetventil (EV₂) geschlossen und das dritte Magnetventil (EV₃) geöffnet sind,
- eine Probeendentnahmestufe, die das Schließen des dritten Magnetventils (EV₃) umfasst.

2. Vorrichtung nach Anspruch 1, **gekennzeichnet dadurch, dass** die zwei ersten Magnetventile (EV₁, EV₂) während des besagten Pipettierzyklus nach der besagten Übergangsstufe geöffnet sind, während das dritte Magnetventil (EV₃) sich in geschlossener Position befindet und das dritte Magnetventil (EV₃) nach der besagten Endmusterentnahmestufe geschlossen ist und das zweite Magnetventil (EV₂) geöffnet ist.

3. Vorrichtung nach Anspruch 2, **gekennzeichnet dadurch, dass** besagter Pipettierzyklus eine Entladungssequenz umfasst, in welcher sich der Motor in positiver Richtung dreht, um eine Entladung der Spülflüssigkeit in die beiden Kammern zu bewirken, wobei diese Sequenz folgende aufeinanderfolgende Stufen umfasst:
- eine Übergangsstufe, in welcher das dritte Magnetventil (EV₃) geschlossen ist, während die zwei ersten Magnetventil (EV₁, EV₂) geöffnet sind, um eine Entladung der in den Kammern enthaltenen Spülflüssigkeit in den Behälter (RL) zu gestatten.
- eine Entladungsphase, in welcher das dritte Magnetventil (EV₃) geöffnet ist, während das zweite Magnetventil (EV₂) geschlossen ist, wobei das erste Magnetventil (EV₁) geöffnet bleibt, um die Entladung des Produktes in den Analysebehälter zu gestatten,
- eine Endentladungsstufe das Schließen des dritten Magnetventils (EV₃) und das Öffnen des zweiten Magnetventils (EV₂) umfasst, wobei das Magnetventil (EV₁) geöffnet bleibt.

4. Vorrichtung nach Anspruch 3, **gekennzeichnet dadurch, dass** besagter Pipettierzyklus eine Spülstufe umfasst, im Verlaufe derer das erste Magnetventil (EV₁) geschlossen ist, während das zweite und dritte Magnetventil (EV₂ und EV₃) geöffnet sind, wobei der Motor (MP) schrittweise betätigt ist, um die in den beiden Spritzen enthaltene Spülflüssigkeit in Richtung der Pipettierinstrumente zu entladen.

5. Vorrichtung nach Anspruch 4, **gekennzeichnet dadurch, dass** der besagte Pipettierzyklus eine Rückkehrphase auf Null umfasst, mit der Füllung der Kammern mit der Spülflüssigkeit, wobei die zwei ersten Absperrschieber (EV₁, EV₂) geöffnet sind, während der dritte Absperrschieber (EV₃) geschlossen ist, sich der Motor in der negativen Richtung dreht, um die Kolben darunter von der Null-Position abzurufen, dann eine Luftabfuhrphase der Pipettierinstrumente, indem das zweite und dritte Magnetventil (EV₂ und EV₃) öffnet und das erste Magnetventil (EV₁) schließt und sich der Motor in positiver Richtung dreht, so dass dieser eine Entladung der Spülflüssigkeit in die Pipettierinstrumente (AP) bewirkt und die Kolben (TP₁, TP₂) in die Ruhestellung bringt, wobei das dritte Magnetventil (EV₃) danach geschlossen ist, während die ersten Magnetventile (EV₁ und EV₂) geöffnet sind.

6. Vorrichtung nach Anspruch 1, **gekennzeichnet dadurch, dass** das zweite und dritte Magnetventil (EV₁, EV₃) während des besagten Pipettierzyklus nach der besagten Übergangsphase geöffnet sind und das zweite Magnetventil (EV₂) geschlossen ist, dass das Magnetventil (EV₃) nach der besagten Probenendentnahmephase geschlossen ist und der Motor eine Übergangsphase der Drehrichtungswende einleitet.

7. Vorrichtung nach Anspruch 6, **gekennzeichnet dadurch, dass** der besagte Pipettierzyklus eine Entladungssequenz umfasst, einerseits mit einer Entladung der Spülflüssigkeit in beide Kammern und, andererseits mit einer Entladung der Probe in den Analysebehälter, wobei diese Sequenz folgende aufeinanderfolgende Phasen umfasst:
- eine Phase, in der das erste und zweite Magnetventil (EV₁, EV₂) geöffnet sind und das dritte Magnetventil (EV₃) geschlossen ist, um eine Entladung der in den Kammern enthaltenen Spülflüssigkeit in den Behälter (RL) zu gestatten,
- eine Spaltausgleichs-Übergangsphase, in welcher das zweite Magnetventil (EV₂) geschlossen ist, das erste Magnetventil (EV₁) geöffnet bleibt und das dritte Magnetventil geschlossen ist,
- eine Phase, in welcher das dritte Magnetventil (EV₃) geöffnet ist, während das erste Magnetventil (EV₁) geöffnet und das zweite Magnetventil (EV₂) geschlossen bleibt, um zu gestatten, das Produkt in den Analysebehälter (RA) zu entladen,
- eine Kontrollphase der Null-Position des Motors.

8. Vorrichtung nach Anspruch 7, **gekennzeichnet dadurch, dass** der besagte Pipettierzyklus eine Spülsequenz umfasst, im Verlauf derer die in der Pipette enthaltene Flüssigkeit in den Spülschacht entladen wird, dass das zweite und das dritte Magnetventil (EV₂, EV₃) geöffnet sind, während das erste Magnetventil (EV₁) geschlossen ist, der Motor schrittweise angetrieben wird, so dass eine Entladung in mehrere Kammern bewirkt wird.

9. Vorrichtung nach Anspruch 8, **gekennzeichnet dadurch, dass** besagter Pipettierzyklus eine Rücklaufphase in den Anfangszustand umfasst, die folgendes einschließt:
- Befüllung der Kammern mit der Spülflüssigkeit, wobei das erste und zweite Magnetventil (EV₁, EV₂) geöffnet sind und das dritte Magnetventil (EV₃) geschlossen ist, sich der Motor in negativer Richtung dreht bis er eine Position fast unterhalb des Nullniveaus erreicht,
- eine Nullkontrollphase, im Verlaufe derer der Motor in positiver Richtung unter Rotation angetrieben wird, bis die Nullposition ermittelt wird,
- eine Spaltausgleichsphase, in welcher das erste Magnetventil (EV₁) geschlossen ist und der Motor unter Rotation in negativer Richtung angetrieben wird, bis dieser wieder in eine Position fast unterhalb der Null-Ebene zurückkehrt,
- eine Rücklaufendphase in den Anfangszustand, in welchem das erste und dritte Magnetventil (EV₁, EV₃) geöffnet sind, während das zweite Magnetventil (EV₂) geschlossen ist, wobei der Motor kurz vor dem Anhalten ist.

10. Vorrichtung nach einem der vorangehenden Ansprüche, **gekennzeichnet dadurch, dass** die zylindrischen Hohlräume (AL₁, AL₂) der beiden Pumpeinheiten (1, 2) in demselben Materialblock (B) verwirklicht sind.

11. Vorrichtung nach einem der vorangehenden Ansprüche, **gekennzeichnet dadurch, dass** besagter Motoriseirung einen Motor (MP) umfasst, der einen Ritzel (PN) antreibt, der kraftschlüssig in die Zahnführung (CR) des besagten Antriebsorgans eingreift.

12. Vorrichtung nach einem der vorangehenden Ansprüche, **gekennzeichnet dadurch, dass** die oberen Enden der zylindrischen Hohlräume (AL₁, AL₂) und der Schaft-/ Kolben-Anordnung (TP₁, TP₂) konisch sind.

13. Vorrichtung nach Anspruch 12, **gekennzeichnet dadurch, dass** die konische Form (PC₁) des kleinsten zylindrischen Hohlraums (AL₁) direkt mit der an die Pipettierinstrumente (AP) angeschlossenen Leitung verbunden ist.

14. Vorrichtung nach Anspruch 1, **gekennzeichnet dadurch, dass** die besagten Pumpeinheiten aus Modulen (M₁ bis M₄) mit je einem Körper bestehen, der zwei parallele Verbindungsseiten (FA₁, FA₂) aufweist, in welche eine Querleitung (CT) mündet in Verbindung mit dem besagten zylindrischen Hohlraum (CC₁, CC₂) und wo eine Portion durch ein Magnetventil (EV'₁) absperrbar ist, wobei die Öffnungen der genannten Leitung mit Verbindungsmitteln versehen sind, wodurch es möglich ist, einen dichten Anschluss mit einer einem anderen Modul (M₁ bis M₄) entsprechenden Öffnung zu sichern, da die beiden Module miteinander durch ihre Verbindungsseiten verbunden sind und in dieser Position mit Hilfe von Befestigungsmitteln (TR) befestigt werden, wobei besagte Öffnungen außerdem entweder mit der Spülflüssigkeits-Einlassleitung oder mit der an die Pipettierinstrumente angeschlossenen Leitung (AP) verbunden werden können.

15. Vorrichtung nach Anspruch 14, **gekennzeichnet dadurch, dass** jeder der Module (M₁ bis M₄) eine Leitung (CP) umfasst, die mit der zylindrischen Ausnehmung (CC₁) verbunden ist und nach außen hin durch eine Öffnung mündet und so einen parallelen Ausgang (SP) bildet, wobei besagte Leitung (CC₁) durch ein Magnetventil (E'V₂) verschließbar ist.

16. Vorrichtung gemäß einer der vorangehenden Patentansprüchen, **gekennzeichnet dadurch, dass** besagte Magnetventile (EV₁, EV₂ - EV'₁, EV'₂) und besagter Motorisierung (MO und MP) über einen Prozessor (MC) gesteuert werden, um somit Informationen über die Position der Schaft-/ Kolben-Anordnung (TP₁, TP₂ - TP'₁, TP'₂) zu empfangen.

17. Vorrichtung nach Anspruch 16, **gekennzeichnet dadurch, dass** die besagten Informationen mittels einer der besagten Zahnführung (CR) zugeordneten optischen Abzweigung verbunden erhalten werden.
